(19) Europäisches Patentamt
European Patent Office
Office européen des brevets

(11) **EP 3 270 541 B1**

## (12) EUROPEAN PATENT SPECIFICATION

(45) Date of publication and mention
of the grant of the patent:
**23.06.2021 Bulletin 2021/25**

(51) Int Cl.:
*H04L 12/46* *(2006.01)*     *H04L 12/26* *(2006.01)*
*H04L 12/28* *(2006.01)*

(21) Application number: **16305891.0**

(22) Date of filing: **12.07.2016**

(54) **METHOD, COMPUTER PROGRAM PRODUCT AND SYSTEM FOR NETWORK ANALYSIS**

EINE METHODE, EIN COMPUTERPROGRAMM PRODUKT UND EIN SYSTEM ZUR ANALYSE VON NETZWERKEN

UNE MÉTHODE, UN PRODUIT DE PROGRAMME INFORMATIQUE ET UN SYSTEM POUR L'ANALYSE D'UN RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.01.2018 Bulletin 2018/03**

(73) Proprietor: **Alcatel Lucent**
**91620 Nozay (FR)**

(72) Inventor: **GACANIN, Haris**
**2018 Antwerpen (BE)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
**EP-A1- 2 651 076**

- **Guillermo Sánchez-Díaz ET AL: "Determination of Similarity Threshold in Clustering Problems for Large Data Sets" In: "Correct System Design", 1 January 2003 (2003-01-01), Springer International Publishing, Cham 032548, XP055298755, ISSN: 0302-9743 ISBN: 978-3-642-34346-9 vol. 2905, pages 611-618, DOI: 10.1007/978-3-540-24586-5_75, * the whole document ***
- **Motoi Iwashita ET AL: "Management Method for Detecting Network Quality Degradation on a Per-user Basis and Per-service Basis", NTT Technical Review, 7 July 2007 (2007-07-07), XP055298754, Retrieved from the Internet: URL:https://www.ntt-review.jp/archive/ntttechnical.php?contents=ntr200707le1.pdf&mode=show_pdf [retrieved on 2016-08-30]**

**Description**

Field of Invention

The field of the invention relates to network analysis. Particular embodiments relate to a method, a computer program product, and a system for network analysis, in particular remote analysis of a plurality of networks.

Background

With the arrival of new services and technologies (e.g. digital television, on-line gaming and home automation) Internet access should extend to various types of home devices (e.g. a set-top box, a game console, a home automation system, plural desktops or laptops, etc.). Such home devices are usually interconnected by means of a Wi-Fi access network. In general, due to different indoor environments (e.g. different room layouts, different building materials, etc.) their corresponding channel functions (i.e. channel signatures) become a limiting factor for the achievable network throughput. This is considered an issue for determining the quality of service (QoS) over the corresponding home network.
Nowadays, it is becoming more important for service operators to determine the available Wi-Fi QoS of a user's home network, before connecting that user. This is because different types of home networks (e.g. residential buildings, houses, office buildings, etc.) may provide different capacities (i.e. network throughput) due to their different size and branching complexity. Consequently, not all home networks can support all types of services (e.g. higher capacity or broadband) and only a few advices (if any) may be given via the operator helpdesk.
EP 2 651 076 A1 discloses a method for determining from a remote server a user QoS class of a home network.
Guillermo Sánchez-Díaz et al. "Determination of Similarity Threshold in Clustering Problems for Large Data Sets", in: "Correct System Design", 1 January 2003, Springer International Publishing, vol. 2905, pages 611-618 discloses a method based on an intra-cluster criterion to obtain a similarity threshold that generates a (near) well-defined clustering for large data sets.
Motoi Iwashita et al. "Management Method for Detecting Network Quality Degradation on a Per-user Basis and Per-service Basis", NTT Technical Review, July 2007, vol. 5, no. 7, pages 1-5 discloses a management method for measuring and analyzing QoS on a per-user or per-service basis.

Summary

A problem associated with the above, is that the user may complain if their service is not satisfactory which may take a lot of time and resources at the operator side before any action may be taken (or worst-case scenario the action not to be done and eventually cancel the contract between the user and the service operator).
Embodiments of the invention aim to provide service operators with a way to analyze or assess existing or prospective users' home networks. Particular embodiments of the invention may aim to facilitate network service identification and troubleshooting, and/or may aim to provide advices to the service operators about the underlying home network QoS capabilities, in particular when dealing with a large number of home networks (for example of the order of one or more millions of home networks).
The present invention is defined by the appended independent claims. Dependent claims constitute embodiments of the invention. Any other subject-matter outside the scope of protection of the claims is to regarded as examples not in accordance with the invention.

Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:

Figure 1 illustrates schematically a first plot relating to the field of the present invention;
Figure 2 illustrates schematically an embodiment of a method according to the present invention, for example for application with the plot of Figure 1;
Figure 3 illustrates schematically a second plot relating to the field of the present invention, for example for use with the method embodiment of Figure 2;
Figure 4 illustrates schematically an embodiment of a system according to the present invention, for example for performing the method embodiment of Figure 2; and
Figure 5 illustrates schematically another embodiment of a method according to the present invention.

Description of embodiments

Currently, only manual Wi-Fi home network (or in-house network) quality assessment, by operator's technicians, is possible within the home network. However, this type of network QoS assessment may lead to high expenditures since the dispatch of technicians is time-consuming and costly. Thus, it is desirable to provide a more proactive, automatic, and/or remotely-operated way to assess a (Wi-Fi) home network's QoS.

However, a problem that may arise is that, due to the infinite number of possible home network environments, an exact Wi-Fi network QoS assessment may be practically impossible. Therefore, it is an insight of the inventors to group "similar" Wi-Fi networks into clusters or classes (it will be understood by the skilled person that a cluster of items may represent a class, and *vice versa*). Moreover, this insight may advantageously be applied for deployment planning tools for planning deployment of one or more home networks, wherein a (practically) infinite number of search references should be reduced to a more tractable, finite number, in order to reduce the computational complexity.

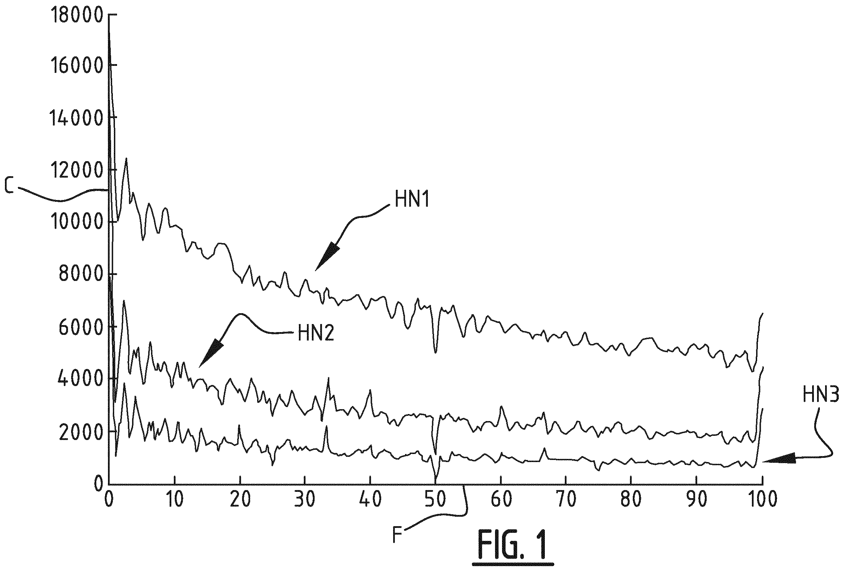

Figure 1 shows, as an example, a plot of ergodic capacity C (here expressed in Bits/s/Hz, but other units and other network throughput parameters may also be used) as a function of frequency F (here expressed in MHz), for a frequency band F of 100 MHz, which may optionally be divided. In this way, communication systems that use OFDM (Orthogonal Frequency Division Multiplexing) and that carry data independently over the divided sub-bands may advantageously be serviced. In this example the frequency band F has been divided into 1024 sub-bands (not shown) for ease of computation, but another suitable number of sub-bands may also be used.

The figure further shows a first home network HN1 (e.g. an access network in a residential building) with three (3) different propagation environments (i.e. branch topologies), a second home network HN2 with six (6) different propagation environments, and a third home network HN3 with ten (10) different propagation environments.

Instantaneous network quality of service (QoS) may be determined via an instantaneous channel measurement (i.e. a value for a network parameter) that is used to determine or compute the corresponding QoS metric. This is because two significantly different channel environments may produce different QoS (metrics). Here "significant" may refer, for instance, to a situation with multiple (e.g. two) channel scenarios, for example with and without interference, in which a noticeable, relevant difference in signatures is observable.

Further, it may be possible to classify or assess different network deployments under a particular (average) QoS metric. Moreover, it may thus be possible to determine the expected QoS metric if the channel measurements (i.e. network parameter values) are provided, by reasoning from the earlier obtained channel measurements and the earlier determined QoS metric in order to derive a relationship for predicting the QoS metric from new channel measurements.

The conditional packet error rate (PER) may for example be derived as follows:

$$PER(SNR, Channel) = 1 - \left[1 - BER(SNR, Channel)\right]^{Number\ of\ bits\ per\ packet}$$

In other words, the conditional packet error rate (PER), which may be deemed an error parameter, may be determined based on, in this example, the bit error rate (BER). The BER itself may for example be based on an indication of the frequency or some related measure (in this example, denoted as 'channel'). The BER itself may further for example also be based on a power indication, such as the signal-to-noise ratio or some such indication. The PER may be further based on the number of bits that is comprised in a (typical) packet, and which may depend on the specific technology or technologies in use - for example, for Power Line Communication, this value may be 1024. It will be understood by the skilled person that other suitable error parameters (i.e. parameters indicating or representing a number, a frequency, a severity, or the like, of error occurrences) may also be used in various other embodiments.

The conditional QoS (network throughput) may for example be represented by:

$$QoS(Channel) = 1 - \left[1 - PER(SNR, Channel)\right]^{Number\ of\ bits\ per\ packet}$$

In other words, the QoS (in this example, the network throughput or the like) may be dependent on the frequency or some related measure (denoted in this example as 'channel'). may be determined based on an error parameter, such as the above-determined packet error rate (PER), or another compatible error parameter. It will be understood by the skilled person that other suitable QoS indication other than the network throughput (i.e. parameters indicating or representing a measure or level of quality pertaining to the home network under consideration) may also be used in various other embodiments. In this particular example, for ease of reasoning and calculation, the signal-to-noise ratio (SNR) may advantageously be considered constant - that is, SNR may be assumed unchanged for home network users with limited mobility (for example, from fixed devices or from mobile devices such as smartphones or laptop computers that are used indoors and are therefore constrained in their mobility).

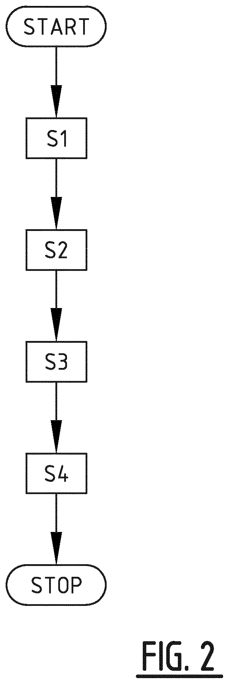

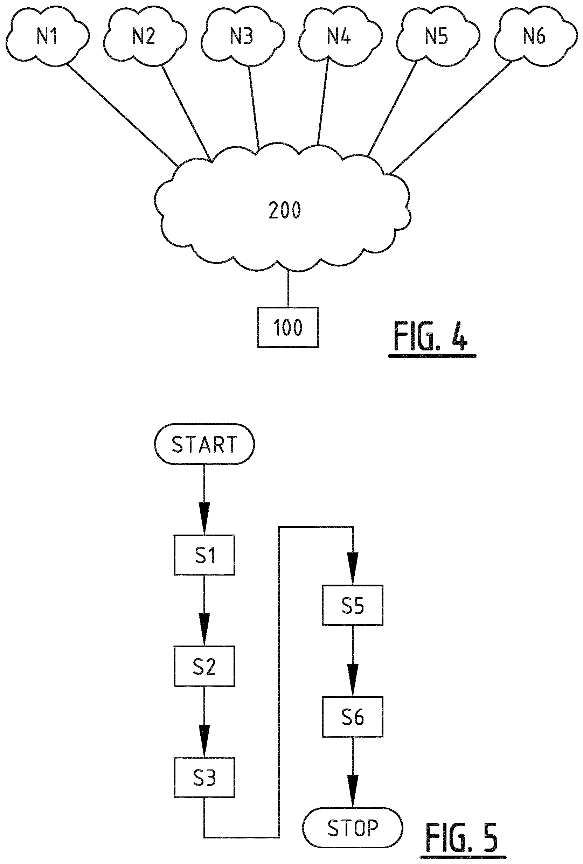

Figure 2 schematically illustrates a method embodiment according to the present invention. The method comprises operations S1, S2, and S3, at a computing device. The embodiment illustrated here also comprises the additional operation S4. The computing device may for example be a system (for example system 100 of Figure 4) at a management centre of a service operator who is responsible for one or more networks to be analysed.

In operation S1, a plurality of network parameter values (i.e. values for network parameters for a respective network) is received from a plurality of networks to be (remotely) analysed, from each respective network of that plurality of networks. In other words, home network measurements are collected (received periodically, or obtained on-demand, etc.). Collection may for example take place by using a management protocol such as TR-069 directly or via a home gateway, or the like. Example network parameters for which values may be collected comprise: Channel (i.e. a channel spectrum), BER (i.e. bit error rate) and SNR (i.e. signal-to-noise ratio). Channel and SNR may preferably be represented as frequency-dependent vectors. BER may preferably be represented as a time-dependent vector.

In operation S2, a quality of service (QoS) metric for each respective network of the plurality of networks is determined, based on the plurality of network parameter values received in operation S1. In other words, the collected home network measurements are processed in order to allow network quality assessment. At this stage, an assessment metric may preferably be selected and estimated based on the collected home network parameter value(s). In this specific example, the home network throughput may be chosen as a QoS metric for the performance or capacity of the home networks under consideration. In order to estimate the corresponding network throughput, the BER may be calculated (for given modulation). Also, PER may be calculated, for example according to Equation (1) above, based on the received network parameter values of the Channel and (in this example) given the SNR. The QoS metric (which may be considered a conditional QoS metric, in the sense that it may depend on the network parameter(s) under consideration) may be calculated, for example according to Equation (2), in this example for the given packet length. Another option may be to calculate the same result as Equation (2) by using a measured BER from Equation (1) or to calculate Equation (2) directly from e.g. measured packet loss at the network gateway(s). In a further developed embodiment, based on the of estimated QoS values, auxiliary variables may be determined. For example, the auxiliary variables may comprise a lower value of the QoS metric, denoted $QoS_{min}$, and/or a higher value of the QoS metric, denoted $QoS_{max}$. Also, an over-time average for the QoS metrics, denoted $QoS_{ave}$, may be calculated, for the corresponding network of the plurality of networks.

In operation S3, the plurality of networks is classified into a plurality of QoS classes, based on the determined plurality of QoS metrics. In other words, in this operation, network classification may be performed based on the estimated QoS metrics. In a preferred embodiment, the classifying may be further based on e.g. corresponding SNR values, that are observed in the respective networks.

The number of networks in the plurality of networks may be at least 10 times greater than the number of QoS classes in the plurality of QoS classes. In this way, reasoning may be kept more tractable. In various further developed embodiments, the number may be at least 100 times, or at least 1000 times, or even more times greater.

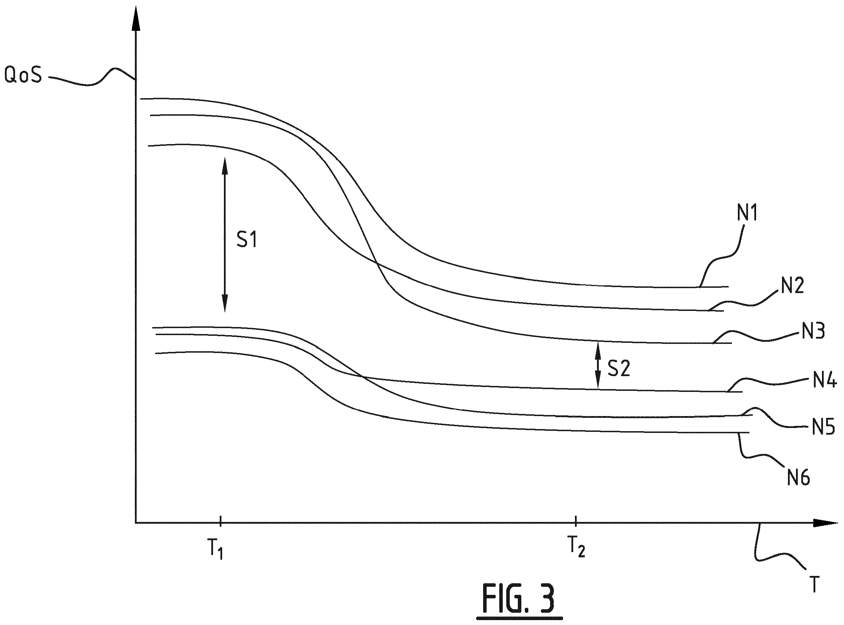

In a particular embodiment, operation S3 may comprise the following aspects. A similarity threshold S may be defined to serve as a cluster size parameter, in order to classify QoS metrics (i.e. the above estimated QoS estimates) into clusters. An example of the role of the similarity threshold S is illustrated in Figure 3, in which it can be seen that, over time (the horizontal axis denoted T), the QoS (the vertical axis denoted QoS - estimated or measured exactly) may vary for individual home networks N1-N6, but that the individual home networks N1-N6 can be clustered into groups or clusters that are more similar internally (according to the defined similarity threshold S in the QoS metric's space) than externally, i.e. relative to home networks of other clusters - in this example, networks N1-N3 are similar to each other in terms of their QoS metric according to the similarity threshold S (for example, if the similarity threshold S is smaller than the QoS metric space difference S1 at a first moment in time T1) and are therefore considered to belong to a first cluster, whereas networks N4-N5 are analogously considered to belong to a second cluster. At a second moment in time T2, the QoS metric space difference S2 may be smaller than the earlier QoS metric space difference S1, but the difference between the first and second cluster may nevertheless be maintained, for example for the reason that behaviour of networks N1-N3 may revert to a higher QoS value. In a preferred embodiment, the average $QoS_{ave}$ may for example be compared with a corresponding QoS reference, for instance as set by the service operator, in order to determine the service quality - that is, in order to determine whether or not the network or networks under consideration can or cannot adequately support one or more given services, such as browsing, digital video, online gaming, etc. In other words, for a given cluster, it may be determined whether or not that cluster can adequately provide a given service, based on that cluster's QoS metrics and based on one or more reference QoS values of the service operator. In specific embodiments, if a given home network belongs to a given cluster, it may be readily predicted whether or not that given home network will or will not likely be able to support a given service adequately, according to the reference QoS values demanded for that given service by the service operator(s).

In presently preferred embodiments, a service recommendation for the particular network or networks may be generated in an additional operation S4. In a preferred first exemplary case, the network may already have been included in the plurality of networks that was analysed. In a second exemplary case, the network may have been excluded from that plurality of networks, for example because the network is of a prospective (i.e. potential) user. In the first exemplary case, the service recommendation may be based on the plurality of QoS classes - that is, by analysing the multiple QoS classes, it may be determined whether or not one or more networks of the plurality of networks can or cannot (adequately) support a given service. In the second exemplary case, the service recommendation may be also based on the plurality of QoS classes, and also on a received plurality of network parameter values of the excluded network. Also in the case of real-time measurements a level of degradation in comparison with the reference signal can be estimated and consequently, a potential alarm can be triggered at the operator's site before the customer complains.

Figure 4 illustrates schematically an embodiment of a system 100 according to the present invention. System 100 is suitable for remotely analysing a plurality of networks, for example the networks N1, N2, N3, N4, N5 and N6 (together denoted as N1-N6). In the present example, six (6) networks N1-N6 are shown for reasons of clarity, but it will be understood that in practical embodiments the networks may number in the thousands or millions. System 100 is connected to the networks N1-N6 via an intermediate wide-area network 200, for example the internet. System 100 comprises a computer memory (not shown) configured for storing a program of instructions and a processor (not shown) configured for executing the program of instructions, in order to perform the steps of any one of the method embodiments according to the present invention. In particular, the steps may comprise operations S1, S2 and S3 of the method embodiment illustrated with respect to Figure 2.Preferably, the steps may further comprise operation S4 of the method embodiment illustrated with respect to Figure 2. Additionally or alternatively, the steps may optionally further comprise operations S5 and S6 of the method embodiment illustrated with respect to Figure 5 below.

Figure 5 illustrates schematically another embodiment of a method according to the present invention. The illustrated embodiment comprises operations S1, S2, and S3, and optional operations S5 and S6, at a computing device. The operations S1, S2 and S3 illustrated in this example correspond analogously with the operations S1, S2 and S3 illustrated in the example of Figure 2, and will therefore not be discussed further. Operation S4 of the method embodiment illustrated with respect to Figure 2 may also optionally be included in this illustrated method embodiment. In operation S5, a plurality of updated network parameter values is received from at least one network under vigilance (i.e., one or more of the networks that are being monitored from the management centre). It is assumed that at least one network parameter value has been received earlier from the network under vigilance, thus allowing comparison thereof. In operation S6, a notification concerning the at least one network under vigilance is generated (e.g. a local alarm is raised in the system of the management centre, or an automated notification is sent to for example the user or owner or maintainer of the at least one network under vigilance in order to warn her of this event), based on a difference between the plurality of updated network parameter values and the at least one earlier received network parameter value, for example if they differ more than a predetermined amount, or if their ratio exceeds a predetermined threshold.

At least some embodiments of the present invention may serve to enable Wi-Fi home network assessment and/or may serve to provide advices (e.g. in the form of automated decision support, or in the form of automated deployment plans, or in the form of warning triggers, etc.) to the service operator about the expected network QoS potential. In this way, the intervention by the operator's helpdesk and technicians at the customer residence may be reduced, thus reducing for example the service operator's costs and the help desk response time.

At least some of the above-described embodiments may help service operators with assessment of new and maintenance of existing customer Wi-Fi home networks. Advantageously, embodiments of the present invention may be combined with data analytics to give more insight into customer experience. In this way manual troubleshooting and intervention by the operator's technicians at the customer residence may be further avoided.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer.

It should be noted that the above-mentioned embodiments illustrate rather than limit the invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering. These words are to be interpreted as names used for convenience.

Whilst the principles of the invention have been set out above in connection with specific embodiments, it is to be understood that this description is merely made by way of example and not as a limitation of the scope of protection which is determined by the appended claims.

## Claims

1. A method for remotely analysing a plurality of networks (N1-N6), comprising, at a computing device:

   - receiving (S1), from each respective network of the plurality of networks, a plurality of network parameter values of that respective network;
   - based on the received plurality of network parameter values, determining (S2) a corresponding quality of service, QoS, metric for each respective network of the plurality of networks;
   - based on the determined plurality of QoS metrics, classifying (S3) the plurality of networks into a plurality of QoS classes;
   - based on the plurality of QoS classes, generating (S4) a service recommendation for at least one network included in the plurality of networks;

   **characterised in that** the method is further comprising, at the computing device:

   - receiving, from at least one network excluded from the plurality of networks, a plurality of network parameter values of the excluded network; and
   - based on the received plurality of network parameter values of the excluded network and on the plurality of QoS classes, generating a service recommendation for the at least one network excluded from the plurality of networks.

2. The method of claim 1, wherein the number of networks in the plurality of networks is at least 10 times, preferably at least 100 times, more preferably at least 1000 times, greater than the number of QoS classes in the plurality of QoS classes.

3. The method of any one of the previous claims, wherein the determining comprises, based on the received plurality of network parameter values, estimating the QoS metric for the respective network of the plurality of networks based on a per-network QoS value averaged over time; and wherein the classifying comprises comparing the determined QoS metric for the respective network with a reference QoS value.

4. The method of any one of the previous claims, wherein the classifying comprises:

   - clustering the determined plurality of QoS metrics of the plurality of networks, according to a similarity threshold for the QoS metric, in order to determine clusters of networks offering a similar QoS.

5. The method of any one of the previous claims, wherein the plurality of network parameter values comprises at least one value for at least one of the following network parameters pertaining to the corresponding network of the plurality of networks: an error parameter, preferably a bit error rate; a power parameter, preferably a signal-to-noise ratio; and a frequency parameter, preferably a channel spectrum; and/or wherein the QoS metric comprises at least one metric representing at least one of the following: a network capacity of the corresponding network, preferably a network throughput; a service availability; a response time; a delay; a delay jitter; and a loss rate.

6. The method of any one of the previous claims, comprising:

- receiving (S5) from at least one network under vigilance a plurality of updated network parameter values, at least one network parameter value having been received earlier from the network under vigilance; and
- based on a difference between the plurality of updated network parameter values and the at least one earlier received network parameter value, generating (S6) a notification concerning the at least one network under vigilance.

7. A computer program product comprising a computer-executable program of instructions for performing, when executed on a computer, the steps of the method of any one of claims 1-6.

8. A system (100) for remotely analysing a plurality of networks (N1-N6), comprising a computer memory configured for storing a program of instructions and a processor configured for executing the program of instructions for performing the following steps:

- receiving (S1), from each respective network of the plurality of networks, a plurality of network parameter values of that respective network;
- based on the received plurality of network parameter values, determining (S2) a corresponding quality of service, QoS, metric for each respective network of the plurality of networks;
- based on the determined plurality of QoS metrics, classifying (S3) the plurality of networks into a plurality of QoS classes; and
- based on the plurality of QoS classes, generating (S4) a service recommendation for at least one network included in the plurality of networks;

**characterised in that** the processor is configured for executing the program of instructions for performing the further following steps:

- receiving, from at least one network excluded from the plurality of networks, a plurality of network parameter values of the excluded network; and
- based on the received plurality of network parameter values of the excluded network and on the plurality of QoS classes, generating a service recommendation for the at least one network excluded from the plurality of networks.

9. The system of claim 8, wherein the number of networks in the plurality of networks is at least 10 times, preferably at least 100 times, more preferably at least 1000 times, greater than the number of QoS classes in the plurality of QoS classes.

10. The system of any one of the claims 8-9, wherein the processor is further configured for the determining by, based on the received plurality of network parameter values, estimating the QoS metric for the respective network of the plurality of networks based on a per-network QoS value averaged over time; and wherein the processor is further configured for the classifying by comparing the determined QoS metric for the respective network with a reference QoS value.

11. The system of any one of the claims 8-10, wherein the processor is further configured for the classifying by:

- clustering the determined plurality of QoS metrics of the plurality of networks, according to a similarity threshold for the QoS metric, in order to determine clusters of networks offering a similar QoS.

12. The system of any one of the claims 8-11, wherein the plurality of network parameter values comprises at least one value for at least one of the following network parameters pertaining to the corresponding network of the plurality of networks: an error parameter, preferably a bit error rate; a power parameter, preferably a signal-to-noise ratio; and a frequency parameter, preferably a channel spectrum; and/or wherein the QoS metric comprises at least one metric representing at least one of the following: a network capacity of the corresponding network, preferably a network throughput; a service availability; a response time; a delay; a delay jitter; and a loss rate.

13. The system of any one of the claims 8-12, wherein the processor is further configured for:

- receiving (S5) from at least one network under vigilance a plurality of updated network parameter values, at least one network parameter value having been received earlier from the network under vigilance; and
- based on a difference between the plurality of updated network parameter values and the at least one earlier received network parameter value, generating (S6) a notification concerning the at least one network under vigilance.

**Patentansprüche**

1. Verfahren zum Fernanalysieren einer Vielzahl von Netzwerken (N1-N6), das an einer Datenverarbeitungsvorrichtung Folgendes umfasst:

- Empfangen (S1) einer Vielzahl von Netzwerkparameterwerten des jeweiligen Netzwerks von jedem jeweiligen Netzwerk der Vielzahl von Netzwerken;
- Bestimmen (S2) einer entsprechenden Dienstgüte(QoS)-Metrik für jedes jeweilige Netzwerk der Vielzahl von Netzwerken auf Basis der empfangenen Vielzahl von Netzwerkparameterwerten;
- Klassifizieren (S3) der Vielzahl von Netzwerken auf Basis der bestimmten Vielzahl von QoS-Metriken in eine Vielzahl von QoS-Klassen;
- Erzeugen (S4) einer Dienstempfehlung für mindestens ein Netzwerk, das in der Vielzahl von Netzwerken beinhaltet ist, auf Basis der Vielzahl von QoS-Klassen;

**dadurch gekennzeichnet, dass** das Verfahren an der Datenverarbeitungsvorrichtung ferner Folgendes umfasst:

- Empfangen einer Vielzahl von Netzwerkparameterwerten eines nicht beinhalteten Netzwerks von mindestens einem Netzwerk, das in der Vielzahl von Netzwerken nicht beinhaltet ist; und
- Erzeugen einer Dienstempfehlung für das mindestens eine Netzwerk, das in der Vielzahl von Netzwerken nicht beinhaltet ist, auf Basis der empfangenen Vielzahl von Netzwerkparameterwerten des nicht beinhalteten Netzwerks und der Vielzahl von QoS-Klassen.

2. Verfahren nach Anspruch 1, wobei die Anzahl von Netzwerken in der Vielzahl von Netzwerken mindestens 10 Mal, bevorzugt mindestens 100 Mal, am bevorzugtesten mindestens 1000 Mal größer als die Anzahl von QoS-Klassen in der Vielzahl von QoS-Klassen ist.

3. Verfahren nach einem der vorhergehenden Ansprüche, wobei das Bestimmen auf Basis der empfangenen Vielzahl von Netzwerkparameterwerten das Schätzen der QoS-Metrik für das jeweilige Netzwerk der Vielzahl von Netzwerken auf Basis eines über die Zeit gemittelten QoS-Wertes pro Netzwerk umfasst und wobei das Klassifizieren das Vergleichen der bestimmten QoS-Metrik für das jeweilige Netzwerk mit einem QoS-Referenzwert umfasst.

4. Verfahren nach einem der vorhergehenden Ansprüche, wobei das Klassifizieren Folgendes umfasst:

- Clustern der bestimmten Vielzahl von QoS-Metriken der Vielzahl von Netzwerken gemäß einem Ähnlichkeitsschwellwert für die QoS-Metrik, um Cluster von Netzwerken zu bestimmen, die eine ähnliche QoS anbieten.

5. Verfahren nach einem der vorhergehenden Ansprüche, wobei die Vielzahl von Netzwerkparameterwerten mindestens einen Wert für mindestens einen der folgenden Netzwerkparameter, die dem entsprechenden Netzwerk der Vielzahl von Netzwerken entsprechen, umfasst: einen Fehlerparameter, vorzugsweise eine Bitfehlerrate; einen Leistungsparameter, vorzugsweise ein Signal-Rauschen-Verhältnis und einen Frequenzparameter, vorzugsweise ein Kanalspektrum; und/oder wobei die QoS-Metrik mindestens eine Metrik umfasst, die mindestens eines von Folgendem repräsentiert: eine Netzwerkkapazität des entsprechenden Netzwerks, vorzugsweise einen Netzwerkdurchsatz; eine Dienstverfügbarkeit; eine Ansprechzeit; eine Verzögerung; einen Verzögerungsjitter und eine Verlustrate.

6. Verfahren nach einem der vorhergehenden Ansprüche, das Folgendes umfasst:

- Empfangen (S5) einer Vielzahl von aktualisierten Netzwerkparameterwerten von mindestens einem überwachten Netzwerk, wobei mindestens ein Netzwerkparameterwert zuvor vom überwachten Netzwerk empfangen wurde; und
- Erzeugen (S6) einer Benachrichtigung, die das mindestens eine überwachte Netzwerk betrifft, auf Basis einer Differenz zwischen der Vielzahl von aktualisierten Netzwerkparameterwerten und dem mindestens einen zuvor empfangenen Netzwerkparameterwert.

7. Computerprogrammprodukt, das ein computerausführbares Programm mit Anweisungen zum Durchführen der Schritte des Verfahrens nach einem der Ansprüche 1 bis 6, wenn es auf einem Computer ausgeführt wird, umfasst.

8. System (100) zum Fernanalysieren einer Vielzahl von Netzwerken (N1-N6), das einen Computerspeicher, der zum Speichern eines Programms mit Anweisungen ausgelegt ist, und einen Prozessor, der zum Ausführen des Programms mit Anweisungen zum Durchführen der folgenden Schritte ausgelegt ist, umfasst:

- Empfangen (S1) einer Vielzahl von Netzwerkparameterwerten des jeweiligen Netzwerks von jedem jeweiligen Netzwerk der Vielzahl von Netzwerken;
- Bestimmen (S2) einer entsprechenden Dienstgüte(QoS)-Metrik für jedes jeweilige Netzwerk der Vielzahl von Netzwerken auf Basis der empfangenen Vielzahl von Netzwerkparameterwerten;
- Klassifizieren (S3) der Vielzahl von Netzwerken auf Basis der bestimmten Vielzahl von QoS-Metriken in eine Vielzahl von QoS-Klassen; und
- Erzeugen (S4) einer Dienstempfehlung für mindestens ein Netzwerk, das in der Vielzahl von Netzwerken beinhaltet ist, auf Basis der Vielzahl von QoS-Klassen;

**dadurch gekennzeichnet, dass** der Prozessor zum Ausführen des Programms mit Anweisungen zum Durchführen der weiteren folgenden Schritte ausgelegt ist:

- Empfangen einer Vielzahl von Netzwerkparameterwerten eines nicht beinhalteten Netzwerks von mindestens einem Netzwerk, das in der Vielzahl von Netzwerken nicht beinhaltet ist; und
- Erzeugen einer Dienstempfehlung für das mindestens eine Netzwerk, das in der Vielzahl von Netzwerken nicht beinhaltet ist, auf Basis der empfangenen Vielzahl von Netzwerkparameterwerten des nicht beinhalteten Netzwerks und der Vielzahl von QoS-Klassen.

9. System nach Anspruch 8, wobei die Anzahl von Netzwerken in der Vielzahl von Netzwerken mindestens 10 Mal, bevorzugt mindestens 100 Mal, am bevorzugtesten mindestens 1000 Mal größer als die Anzahl von QoS-Klassen in der Vielzahl von QoS-Klassen ist.

10. System nach einem der Ansprüche 8 bis 9, wobei der Prozessor ferner zum Bestimmen auf Basis der empfangenen Vielzahl von Netzwerkparameterwerten durch Schätzen der QoS-Metrik für das jeweilige Netzwerk der Vielzahl von Netzwerken auf Basis eines über die Zeit gemittelten QoS-Wertes pro Netzwerk ausgelegt ist und wobei der Prozessor ferner zum Klassifizieren durch Vergleichen der bestimmten QoS-Metrik für das jeweilige Netzwerk mit einem QoS-Referenzwert ausgelegt ist.

11. System nach einem der Ansprüche 8 bis 10, wobei der Prozessor ferner zum Klassifizieren durch Folgendes ausgelegt ist:

- Clustern der bestimmten Vielzahl von QoS-Metriken der Vielzahl von Netzwerken gemäß einem Ähnlichkeitsschwellwert für die QoS-Metrik, um Cluster von Netzwerken zu bestimmen, die eine ähnliche QoS anbieten.

12. System nach einem der Ansprüche 8 bis 11, wobei die Vielzahl von Netzwerkparameterwerten mindestens einen Wert für mindestens einen der folgenden Netzwerkparameter, die dem entsprechenden Netzwerk der Vielzahl von Netzwerken entsprechen, umfasst: einen Fehlerparameter, vorzugsweise eine Bitfehlerrate; einen Leistungsparameter, vorzugsweise ein Signal-Rauschen-Verhältnis und einen Frequenzparameter, vorzugsweise ein Kanalspektrum; und/oder wobei die QoS-Metrik mindestens eine Metrik umfasst, die mindestens eines von Folgendem repräsentiert: eine Netzwerkkapazität des entsprechenden Netzwerks, vorzugsweise einen Netzwerkdurchsatz; eine Dienstverfügbarkeit; eine Ansprechzeit; eine Verzögerung; einen Verzögerungsjitter und eine Verlustrate.

13. System nach einem der Ansprüche 8 bis 12, wobei der Prozessor ferner zu Folgendem ausgelegt ist:

- Empfangen (S5) einer Vielzahl von aktualisierten Netzwerkparameterwerten von mindestens einem überwachten Netzwerk, wobei mindestens ein Netzwerkparameterwert zuvor vom überwachten Netzwerk empfangen wurde; und
- Erzeugen (S6) einer Benachrichtigung, die das mindestens eine überwachte Netzwerk betrifft, auf Basis einer Differenz zwischen der Vielzahl von aktualisierten Netzwerkparameterwerten und dem mindestens einen zuvor empfangenen Netzwerkparameterwert.

**Revendications**

1. Procédé pour analyser à distance une pluralité de réseaux (N1-N6), comprenant, au niveau d'un dispositif informatique :

- la réception (S1), à partir de chaque réseau respectif de la pluralité de réseaux, d'une pluralité de valeurs de paramètres de réseau de ce réseau respectif ;
- sur la base de la pluralité de valeurs de paramètres de réseau reçues, la détermination (S2) d'une métrique de qualité de service, QoS, correspondante pour chaque réseau respectif de la pluralité de réseaux ;
- sur la base de la pluralité de métriques de QoS déterminées, la classification (S3) de la pluralité de réseaux en une pluralité de classes QoS ;
- sur la base de la pluralité de classes QoS, la génération (S4) d'une recommandation de service pour au moins un réseau inclus dans la pluralité de réseaux ;

**caractérisé en ce que** le procédé comprend en outre, au niveau du dispositif informatique :

- la réception, à partir d'au moins un réseau exclu de la pluralité de réseaux, d'une pluralité de valeurs de paramètres de réseau du réseau exclu ; et
- sur la base de la pluralité de valeurs de paramètres de réseau reçues du réseau exclu et de la pluralité de classes QoS, la génération d'une recommandation de service pour l'au moins un réseau exclu de la pluralité de réseaux.

2. Procédé de la revendication 1, dans lequel le nombre de réseaux dans la pluralité de réseaux est au moins 10 fois, de préférence au moins 100 fois, de manière davantage préférée au moins 1000 fois, supérieur au nombre de classes QoS dans la pluralité de classes QoS.

3. Procédé de l'une quelconque des revendications précédentes, dans lequel la détermination comprend, sur la base de la pluralité de valeurs de paramètres de réseau reçues, l'estimation de la métrique de QoS pour le réseau respectif de la pluralité de réseaux sur la base d'une valeur de QoS par réseau moyennée dans le temps ; et dans lequel la classification comprend la comparaison de la métrique de QoS déterminée pour le réseau respectif avec une valeur de QoS de référence.

4. Procédé de l'une quelconque des revendications précédentes, dans lequel la classification comprend :

- le regroupement de la pluralité de métriques de QoS déterminées de la pluralité de réseaux, selon un seuil de similarité pour la métrique de QoS, afin de déterminer des grappes de réseaux offrant une QoS similaire.

5. Procédé de l'une quelconque des revendications précédentes, dans lequel la pluralité de valeurs de paramètres de réseau comprend au moins une valeur pour au moins un des paramètres de réseau suivants se rapportant au réseau correspondant de la pluralité de réseaux : un paramètre d'erreur, de préférence un taux d'erreur binaire ; un paramètre de puissance, de préférence un rapport signal/bruit ; et un paramètre de fréquence, de préférence un spectre de canal ; et/ou dans lequel la métrique de QoS comprend au moins une métrique représentant au moins un des éléments suivants : une capacité de réseau du réseau correspondant, de préférence une vitesse de réseau ; une disponibilité de service ; un temps de réponse ; un retard ; une gigue de retard ; et un taux de perte.

6. Procédé de l'une quelconque des revendications précédentes, comprenant :

- la réception (S5), à partir d'au moins un réseau sous vigilance, d'une pluralité de valeurs de paramètres de réseau mises à jour, au moins une valeur de paramètre de réseau ayant été reçue plus tôt à partir du réseau sous vigilance ; et
- sur la base d'une différence entre la pluralité de valeurs de paramètres de réseau mises à jour et l'au moins une valeur de paramètre de réseau reçue plus tôt, la génération (S6) d'une notification concernant l'au moins un réseau sous vigilance.

7. Produit de programme informatique comprenant un programme exécutable par ordinateur d'instructions pour réaliser, lorsqu'elles sont exécutées sur un ordinateur, les étapes du procédé de l'une quelconque des revendications 1 à 6.

8. Système (100) pour analyser à distance une pluralité de réseaux (N1-N6), comprenant une mémoire d'ordinateur configurée pour stocker un programme d'instructions et un processeur configuré pour exécuter le programme d'instructions, pour réaliser les étapes suivantes :

- recevoir (S1), à partir de chaque réseau respectif de la pluralité de réseaux, une pluralité de valeurs de paramètres de réseau de ce réseau respectif ;
- sur la base de la pluralité de valeurs de paramètres de réseau reçues, déterminer (S2) une métrique de qualité de service, QoS, correspondante pour chaque réseau respectif de la pluralité de réseaux ;
- sur la base de la pluralité de métriques de QoS déterminées, classer (S3) la pluralité de réseaux en une pluralité de classes QoS ; et
- sur la base de la pluralité de classes QoS, générer (S4) une recommandation de service pour au moins un réseau inclus dans la pluralité de réseaux ;

**caractérisé en ce que** le processeur est configuré pour exécuter le programme d'instructions pour réaliser les étapes supplémentaires suivantes :

- recevoir, à partir d'au moins un réseau exclu de la pluralité de réseaux, une pluralité de valeurs de paramètres de réseau du réseau exclu ; et
- sur la base de la pluralité de valeurs de paramètres de réseau reçues du réseau exclu et de la pluralité de classes QoS, générer une recommandation de service pour l'au moins un réseau exclu de la pluralité de réseaux.

9. Système de la revendication 8, dans lequel le nombre de réseaux dans la pluralité de réseaux est au moins 10 fois, de préférence au moins 100 fois, de manière davantage préférée au moins 1000 fois, supérieur au nombre de classes QoS dans la pluralité de classes QoS.

10. Système de l'une quelconque des revendications 8 et 9, dans lequel le processeur est en outre configuré pour une détermination basée sur la pluralité de valeurs de paramètres de réseau reçues, en estimant la métrique de QoS pour le réseau respectif de la pluralité de réseaux sur la base d'une valeur de QoS par réseau moyennée dans le temps ; et dans lequel le processeur est en outre configuré pour une classification en comparant la métrique de QoS déterminée pour le réseau respectif avec une valeur de QoS de référence.

11. Système de l'une quelconque des revendications 8 à 10, dans lequel le processeur est en outre configuré pour la classification en :

- regroupant la pluralité de métriques de QoS déterminées de la pluralité de réseaux, selon un seuil de similarité pour la métrique de QoS, afin de déterminer des grappes de réseaux offrant une QoS similaire.

12. Système de l'une quelconque des revendications 8 à 11, dans lequel la pluralité de valeurs de paramètres de réseau comprend au moins une valeur pour au moins un des paramètres de réseau suivants se rapportant au réseau correspondant de la pluralité de réseaux : un paramètre d'erreur, de préférence un taux d'erreur binaire ; un paramètre de puissance, de préférence un rapport signal/bruit ; et un paramètre de fréquence, de préférence un spectre de canal ; et/ou dans lequel la métrique de QoS comprend au moins une métrique représentant au moins un des éléments suivants : une capacité de réseau du réseau correspondant, de préférence une vitesse de réseau ; une disponibilité de service ; un temps de réponse ; un retard ; une gigue de retard ; et un taux de perte.

13. Système de l'une quelconque des revendications 8 à 12, dans lequel le processeur est en outre configuré pour :

- recevoir (S5), à partir d'au moins un réseau sous vigilance, une pluralité de valeurs de paramètres de réseau mises à jour, au moins une valeur de paramètre de réseau ayant été reçue plus tôt à partir du réseau sous vigilance ; et
- sur la base d'une différence entre la pluralité de valeurs de paramètres de réseau mises à jour et l'au moins une valeur de paramètre de réseau reçue plus tôt, générer (S6) une notification concernant l'au moins un réseau sous vigilance.

FIG. 1

FIG. 2

EP 3 270 541 B1

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2651076 A1

**Non-patent literature cited in the description**

- Determination of Similarity Threshold in Clustering Problems for Large Data Sets. **GUILLERMO SÁNCHEZ-DÍAZ et al.** Correct System Design. Springer International Publishing, 01 January 2003, vol. 2905, 611-618

- **MOTOI IWASHITA et al.** Management Method for Detecting Network Quality Degradation on a Per-user Basis and Per-service Basis. *NTT Technical Review,* July 2007, vol. 5 (7), 1-5